# EUROPÄISCHE PATENTSCHRIFT

(11) **EP 1 173 304 B1**
(45) Veröffentlichungstag und Bekanntmachung des Hinweises auf die Patenterteilung: **20.07.2005**
(21) Anmeldenummer: 01915283.4
(22) Anmeldetag: 21.02.2001
(51) Int. Cl.: B23K 26/34

(54) **VERFAHREN ZUR HERSTELLUNG EINES OBERFLÄCHENLEGIERTEN ZYLINDRISCHEN, TEILZYLINDRISCHEN ODER HOHLZYLINDRISCHEN BAUTEILS**
METHOD FOR PRODUCING A SURFACE-ALLOYED CYLINDRICAL, PARTIALLY CYLINDRICAL OR HOLLOW CYLINDRICAL COMPONENT
PROCEDE DE PRODUCTION D'UN COMPOSANT CYLINDRIQUE, PARTIELLEMENT CYLINDRIQUE OU CYLINDRIQUE CREUX DONT LA SURFACE EST ALLIEE

(30) Priorität: 28.02.2000 DE 20003515 U; 28.02.2000 DE 10009250
(43) Veröffentlichungstag der Anmeldung: 23.01.2002
(73) Patentinhaber: Hydro Aluminium Deutschland GmbH, 51149 Köln (DE)
(72) Erfinder: FISCHER, Alexander, 53913 Swisttal (DE); KAHN, Joachim, 35630 Ehringshausen (DE); FEIKUS, Franz, Josef, 53123 Bonn (DE)
(74) Vertreter: Simons, Johannes, Dipl.-Ing.
(86) Internationale Anmeldenummer: PCT/EP2001/001932
(87) Internationale Veröffentlichungsnummer: WO 2001/064385

(56) Entgegenhaltungen:
- WO-A-97/10067
- WO-A-98/56566
- DE-A- 19 817 091
- US-A- 5 431 967
- US-A- 5 837 960

## Beschreibung

Die Erfindung betrifft ein Verfahren zur Herstellung eines oberflächenlegierten zylindrischen, teilzylindrischen oder hohlzylindrischen Bauteiles, wobei ein Energiestrahl mit einer linienförmigen Strahlfläche, im folgenden Linienfokus genannt, auf eine Werkstückoberfläche gerichtet, dadurch die Werkstückoberfläche aufgeschmolzen und ein Hartstoffpulver in die aufgeschmolzene Oberfläche zugeführt wird, wobei in der Auftreffzone des Energiestrahls ein lokal begrenztes Schmelzbad mit einer Erwärmungs- und Aufschmelzfront, einer Lösungszone und einer Erstarrungsfront erzeugt wird.

Aus der WO 97/10067 ist ein Verfahren zur Beschichtung metallischer werkstücke bekannt, bei dem metallhaltiges Pulver mit einem Laserstrahl aufgeschmolzen und dann auf die Oberfläche des metallischen Werkstücks aufgetragen wird. Gemäß Patentanspruch 1 der WO-Schrift soll das Pulver koaxial zu dem Laserstrahl in den Schmelzebereich geführt werden und in Form von 0,1 bis 1 mm breiten Spuren über eine größere Fläche verteilt werden.

Zur Durchführung des bekannten Verfahrens ist gemäß einem bevorzugten Ausführungsbeispiel der WO 97/10067 eine Vorrichtung zur Pulverzuführung koaxial an einem Laserstrahl-Fokussierkopf relativ zueinander in dreiachsiger Richtung verfahrbar sind. Die Verfahrbarkeit ist jedoch wegen der erforderlichen Regeltechnik nur eingeschränkt möglich.

Für eine großtechnisch einsetzbare Beschichtungsanlage sind Spurbreiten von 0,1 bis 1 mm unwirtschaftlich und dreiachsig bewegliche Vorrichtungen zu aufwendig. Außerdem können mit der bekannten Vorrichtung nicht unmittelbar größere Flächen, wie z.B. Innenlaufflächen von Zylinderwandungen, beschichtet werden.

Zur Durchführung einer Beschichtung auf Innenlaufflächen sind Laufflächenbehandlungsanlagen bekannt, bestehend aus einer drehbaren Spannvorrichtung für einen Zylinderblock, einer Laserbehandlungseinheit mit einem Strahlkopf, die mit einer Pulverzuführungsvorichtung verbunden ist, und einer Transfereinheit, die den Zylinderblock vor der Laserbehandlungseinheit positioniert und einem Antrieb für die Bewegung der Transfereinheit entlang einer Transferachse.

Für derartige Laufflächenbehandlungsanlagen bestehen hohe Anforderungen an die Präzision hinsichtlich der Ausrichtung der Anlagenteile und deren Verschleißverhalten, da die damit hergestellten Motorblöcke später mit separat hergestellten Kolben ausgerüstet werden und aus Kostengründen möglichst auf eine aufwendige Nachbehandlung verzichtet werden soll.

Aus der US 5 837 960 A ist ein Verfahren zur Herstellung von Gegenständen aus partikelförmigem Material mittels eines Lasers bekannt, wobei das Material durch einen Laserstrahl geschmolzen wird und an Punkten entlang eines Werkzeugpfads deponiert werden um einen Gegenstand gewünschter Form und Dimension herzustellen.

Aus der DE 198 17 091 A1 ist ein Verfahren zur Herstellung eines Werkstücks mit einer verschleißbeständigen Oberfläche bekannt, wobei mit einer Sonde zusammen mit der kontinuierlichen Zuführung von Siliziumpulver in einem Förder- und Schutzgas ein Energiestrahl auf einen spiralig wandernden definierten Oberflächenort aufgebracht wird. Zur Bearbeitung der gesamten zu bearbeitenden Oberfläche wird unter ortsfest gehaltenem Werkstück bei jeweils einer abgeschlossenen Drehung der Sonde die Sonde gleichzeitig abgesenkt.

Aufgabe der vorliegenden Erfindung ist es, ein wirtschaftliches, großtechnisch anwendbares Oberflächenbehandlungsverfahren für zylindrische oder teilzylindrische Oberflächenformen zu entwikkeln, mit dem ein tribologisch optimierter, wärmebehandelbarer Hohlzylinderrohling günstig herstellbar ist.

Diese Aufgabe wird erfindungsgemäß durch die in den Patentansprüchen angegebenen Merkmale gelöst. In zahlreichen Versuchen wurde festgestellt, daß eine hohe Genauigkeit und ein geringeres Verschleißverhalten der Laufflächenbehandlungsanlage und der darauf produzierten Teile dann erreicht werden kann, wenn
1. die Aufspannebene der Spannvorrichtung 1 parallel zur Strahlrichtung der Lasereinheit 3 ausgerichtet ist,
2. die Lasereinheit 3 senkrecht zur Aufspannebene der Spannvorrichtung 1 verschiebbar ist, wobei die Strahlrichtung senkrecht zur Transferachse 10 in einem Winkel α < 45° zum Schwerkraftvektor ausgerichtet ist und
3. die Pulverzugabe 5 entweder direkt in Strahlrichtung der Lasereinheit 3 oder (in Vorschubrichtung gesehen) kurz vor der Strahlauftreffzone 12 mündet.

Für eine kostengünstige Bearbeitung in der Laufflächenbehandlungsanlage ist vorgesehen, daß eine Laserbehandlungseinheit 3 aus mehreren Strahleinrichtungen oder einer Einrichtung mit geteiltem Strahl besteht, die in eine Zylinderbohrung einfahrbar sind, wobei mehrere Bearbeitungszonen auf der Zylinderwand hintereinander (in Zylinderachsrichtung gesehen) angeordnet sind.

Ferner kann die Produktionskapazität der Laufflächenbehandlungsanlage dadurch verbessert werden, daß die Pulverzuführungseinrichtung 5 aus mehreren Zugabeeinrichtungen gleicher Anzahl wie Bearbeitungszonen besteht, die in eine Zylinderbohrung einfahrbar sind, wobei die Zugabeöffnungen hintereinander (in Zylinderachsrichtung gesehen) angeordnet sind.

Das erfindungsgemäße Verfahren besteht in einer Kombination von
a) Linienfokus mit Linienbreiten quer zur Vorschubrichtung von größer 4 mm,
b) Hochenergiestrahl mit einer Wellenlänge zwischen 780 und 940 nm und eine
c) Pulverzugabe in der Wannenlage verbunden mit einer spezifischen Energieeinbringung von 5.000 - 600.000 W/cm² herstellbar ist.

Zur gesteuerten Si-Kornverteilung und Ausbildung von Siliziumprimärkristallen bei Phasendurchmessern von bis zu 80 µm in der eutektisch erstarrenden Restschmelze trägt
d) die Abkühlungsgeschwindigkeit 200 - 600 K/sec bei.

Der Verfahrensschritt d) bedeutet, daß der Hartstoff, z.B. das Silizium, im Schmelzbad vollständig gelöst werden muß.

Die Zeitdauer ist abhängig von der spezifischen Leistung des Lasers. Wenn der Linienfokus zulange einwirkt, entsteht Porenbildung durch Verdampfen des Aluminiums bzw. der Matrixlegierung und die Hartstoffe können verklumpen.

Die vorschubgeschwindigkeit soll gemäß Verfahrensschritt e) unter 10.000 mm/min liegen, da sonst die Eintrittsenergie für den Eintritt des Hartstoffs in die Schmelze nicht ausreicht. Bei gegebener Leistung soll der Laserstrahl in die Matrix eingekoppelt werden mit einer Energieausbeute von 40 - 60 %. Bei zu hoher Abkühlungsgeschwindigkeit > 600 K/sec reicht die Lösungszeit für den Hartstoff nicht aus, bei unter 200 K/sec entstehen Risse in der Auflegierungszone, da zuviel Hartstoff in Lösung geht.

In einer bevorzugten Ausführungsform der Erfindung können mehrere Energiestrahleinheiten als weitere Parameter zur Steuerung der Gefügeeigenschaften durch räumlich veränderbare Abkühlungsgeschwindigkeiten genutzt werden.

Dadurch sind räumlich unterschiedliche Oberflächenhärten einstellbar, die eine rein mechanische Weiterbearbeitung und Endbearbeitung ermöglichen. Wenn die Oberflächenhärte größer 160 HV wird, kann mit Diamantwerkstoff ohne Riefenbildung und ohne Verschmieren gehont werden. Dabei können in einem weiteren Bearbeitungsgang rein mechanisch die Siliziumprimärkristalle oder andere Hartstoffe mit > 1 µm Durchmesser an der Oberfläche mit < 1 µm abtragend freigelegt werden.

Gemäß einem bevorzugten Ausführungsbeispiel soll der Linienfokus in Doppelspur hintereinander (bezogen auf die Vorschubrichtung) auf die zu legierende Oberfläche gerichtet werden, so daß eine partielle Wärmebehandlung durch Härtung, Rekristallisation, Verlängerung der Ausscheidungszeit, Homogenisierung und Phasenvergröberungen der Ausscheidungen möglich wird.

Gemäß einem weiteren bevorzugten Anwendungsfall kann auch die Pulverkomponente in einer Doppelspur aufgetragen werden, so daß hier unterschiedliche Zusammensetzungen und Auftragsraten möglich sind, z.B. Aufbau von Gradientenwerkstoffen mit gesteuerter Legierungsbildung.

Für das Anfahren und Abschalten der Beschichtungseinrichtung kann in bevorzugter Weise eine regelbare Blende eingesetzt werden, die zur Verlängerung oder Verkürzung der Linienfokus-Breite in Vorschubrichtung gesehen dient.

Im Gegensatz zu der bekannten Beschichtungsvorrichtung gemäß DE 198 17 091 A1 (NU TECH/VAW motor GmbH) wird mit einer einachsig beweglichen Energiestrahlvorrichtung und einem mehrachsig beweglichen Bauteil gearbeitet. Hierbei ist es von besonderem Vorteil, daß die Drehgeschwindigkeit des Werkstückes veränderbar ist, um ein grobphasiges Gefüge (durch langsame Drehung) oder ein feinzelliges bzw. feinphasiges Gefüge (durch schnelleres Drehen) bei gleichem Energieeintrag zu verwirklichen.

Wie bereits erwähnt, kann eine Doppelspur zum Einlegieren verschiedener Legierungstypen verwendet werden. Das Pulver kann einstufig (ein Pulverstrahl) oder mehrstufig (mehrere Pulverstrahle) über entsprechend geformte Pulverschlitzdüsen auf die Werkstückoberfläche aufgebracht werden. Die Linienfokus-Breite beträgt mindestens 4 mm, vorzugsweise 5 bis 15 mm.

Eine Besonderheit des erfindungsgemäßen Verfahrens besteht darin, daß variable Eindringtiefen zwischen 100 - 2500 µm durch Veränderung der Vorschubgeschwindigkeit und/oder durch den flächenbezogenen Energieeintrag darstellbar sind. Zur verbesserten Einkoppelung wird vorzugsweise ein Diodenlaser mit dem im Anspruch angegebenen Wellenlängenbereich verwendet, der in Verbindung mit einem vorher aufgetragenen Hartstoffpulver und hartstoffhaltige Pulver, besonders Si oder Si-haltiges Pulver, eine hervorragende Wärmeeinbringung in die Tiefe des Bauteils ermöglicht.

Im folgenden wird die Erfindung anhand mehrerer Ausführungsbeispiele näher erläutert. Es zeigen:
- Figur 1: Querschnitt durch eine erfindungsgemäße Laufflächenbehandlungsanlage während der Behandlung eines Zylinderblockes,
- Figur 2: Längsschnitt durch eine erfindungsgemäße Laufflächenbehandlungsanlage während des Einfahrens in einen 4-Zylinder-Reihenmotorblock,
- Figuren 3 - 5: Ausschnitt X gemäß Figur 2 in vergrößerten Darstellungen,
- Figur 6: Querschnitt analog zu Figur 1 mit 2 Strahlköpfen,
- Fig. 7: Prinzipbild zur Erläuterung des erfindungsgemäßen Herstellungsverfahrens,
- Fig. 8: Längsschnitt durch eine erfindungsgemäße Laufflächenbehandlungsanlage mit Pulverzufuhr über eine Vibrationsförderrinne,
- Fig. 9: Querschnitt entlang AA von Figur 8,
- Fig. 10: Vergrößerter Ausschnitt Y aus Figur 8,
- Fig. 11: Prinzip eines Schneckenförderers analog zu Figur 1.

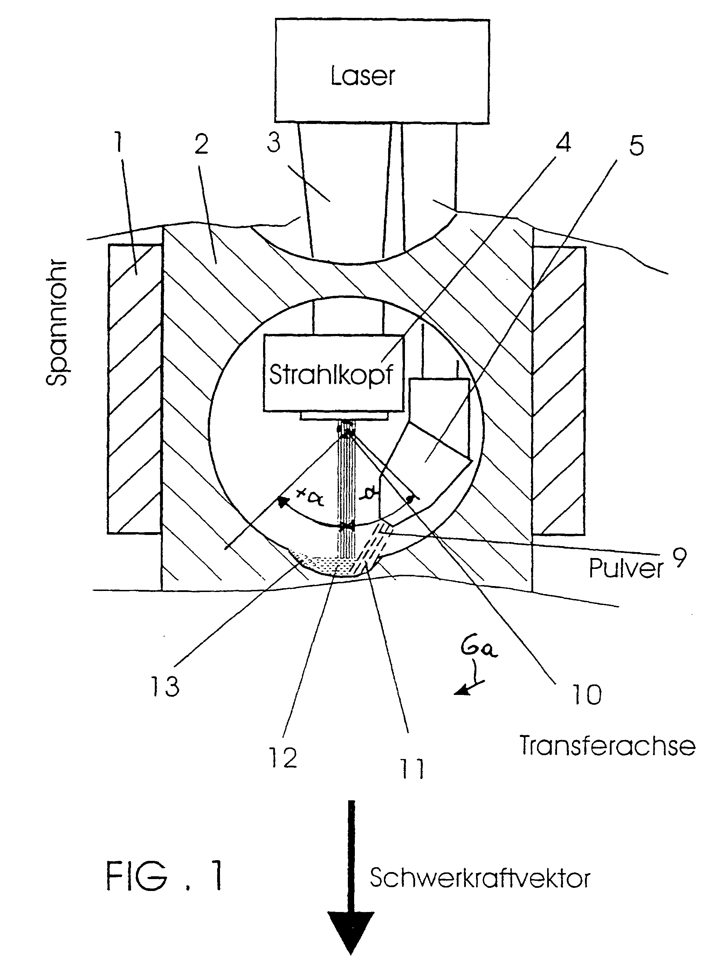

In Figur 1 ist in einer Spannvorrichtung 1 ein Zylinderblock 2 eines 4-Zylinder-Reihenmotors so eingespannt, daß die Längsachse des Reihenmotors in Schwerkraftvektorrichtung zeigt.

Eine Laserbehandlungseinheit 3 ragt mit dem Strahlkopf 4 in die Bohrung des Zylinderblockes 2 hinein. Der Strahlkopf ist in Richtung einer Transferachse 10 (senkrecht zur Zeichnungsebene) verschiebbar.

Aus dem Strahlkopf 4 tritt in Schwerkraftrichtung ein Laserstrahl aus, der in der Strahlauftreffzone 12 auf die Oberfläche der Zylinderwand trifft und dort eine Erwärmungszone 11, eine Schmelzzone 12 und eine Erstarrungszone 13 bildet.

Im Bereich der Strahlauftreffzone mündet auch eine Pulverzuführungsvorrichtung 5, mit der ein Pulverstrahl 9 entweder direkt in Strahlrichtung oder - in Vorschubrichtung gesehen - kurz vor dem Auftreffpunkt der Laserstrahlen auf die zu behandelnde Zylinderwand aufgebracht wird. Mit der Aufbringung des Pulvers können die Gefügeeigenschaften sowohl von der Legierungsseite her als auch von der Art der Gefügeausbildung beeinflußt werden. Dies geschieht z. B. durch Art und Menge des zugeführten Pulvers.

In einer nicht dargestellten Variante können mehrere Pulverzuführungsvorrichtungen gleichzeitig in die Zylinderbohrung eingebracht werden. Auch die Laserbehandlung kann über mehrere Strahlköpfe gleichzeitig erfolgen.

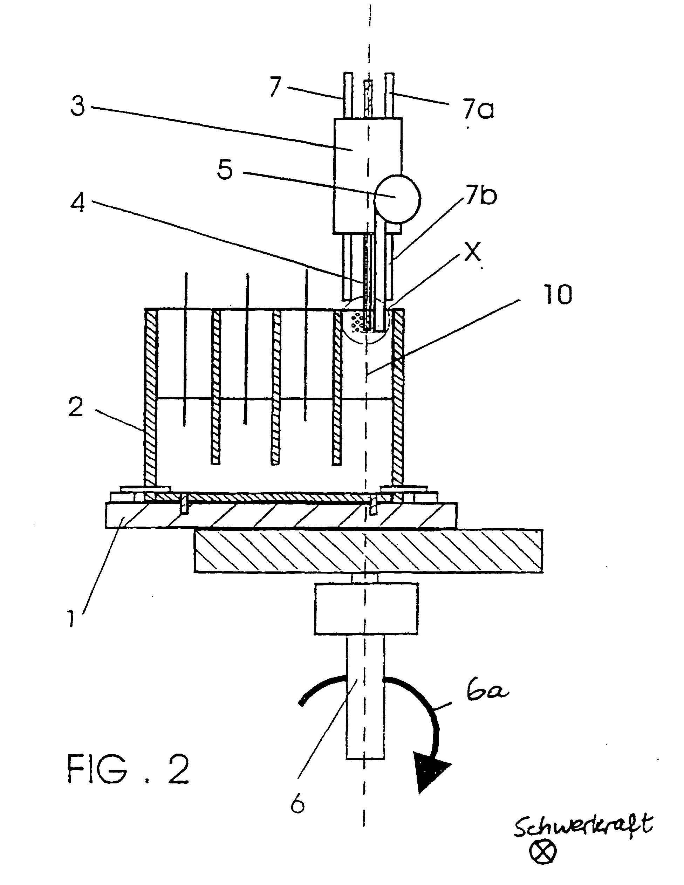

Figur 2 zeigt eine erfindungsgemäß ausgebildete Laufflächenbehandlungsanlage in einem 4-Zylinder-Reihenmotor. Man erkennt den Zylinderblock 2 im Längsschnitt - also senkrecht zur Abbildungsebene nach Figur 1. Die Spannvorrichtung 1 ist auf einem Spanntisch 1a und einem Drehteller 1b angeordnet, der mit einem Antrieb 6 für die Bewegung der Transfereinheit entlang einer Transferachse 10 verbunden ist.

Die Pfeilrichtung 6a gibt an, in welche Richtung der Motorblock 2 bei der Behandlung gedreht wird. Hierbei ist es wichtig, daß die Pulverzuführungsvorrichtung 5 vor dem Laserkopf 4 positioniert ist, wie in Figur 2, Ausschnitt X, dargestellt.

Über eine Spindel 7 wird die Einfahrbewegung des Laserkopfes 4 in die Zylinderbohrung bewirkt. Die Achsparallelität zwischen Zylinderbohrungsachse und Drehachse 10 ist wichtig für die Einhaltung der Fertigungstoleranzen. Sie wird durch die Schlittenführungen 7a, 7b sichergestellt, auf denen die Laserbehandlungseinheit 3 über entsprechende Gegenführungen in den Zylinderblock 2 ein- und ausgefahren wird.

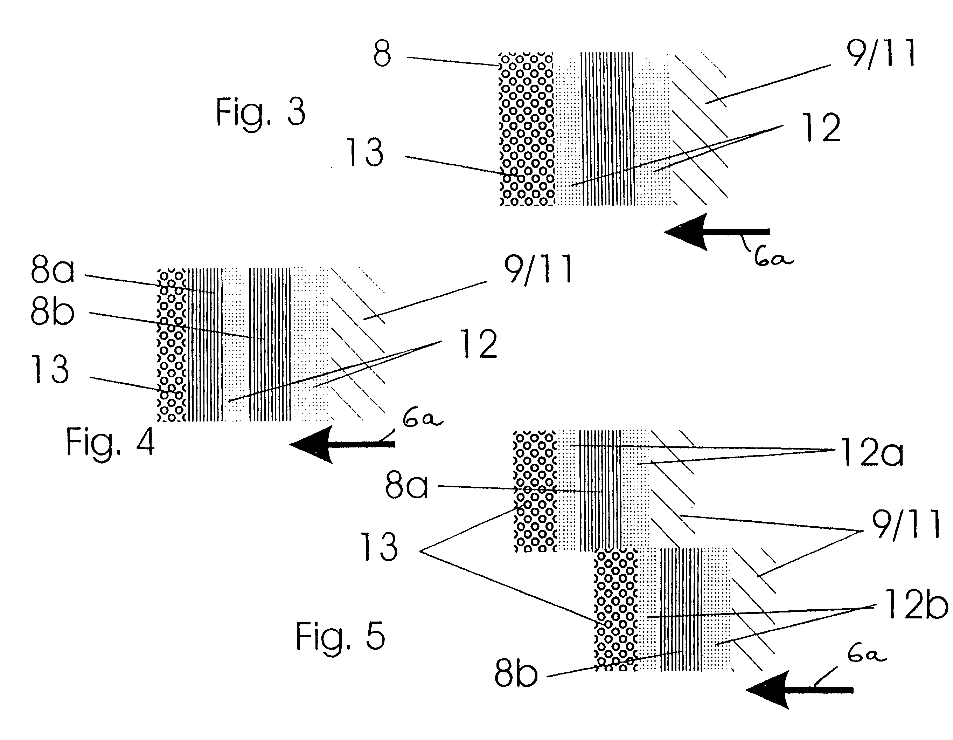

Die Ausschnittsvergrößerungen nach Figuren 3 - 5 zeigen noch einmal die Erwärmungszone 9/11, die Schmelzzone 12 und die Erstarrungszone 13 in vergrößerter Darstellung. Die flächenmäßige Ausdehnung der einzelnen Zonen, bzw. Bereiche, kann durch die Drehgeschwindigkeit des Zylinderblockes 2, der Bewegung der Transfereinheit entlang der Transferachse 10 und durch die Anzahl der Laserbehandlungseinrichtungen bzw. der Strahleinrichtungen sowie der Pulverzuführungsvorrichtungen beeinflußt werden.

Während in Figur 3 nur ein Brennfleck 8 für den einfachen Laserstrahlkopf 4 vorhanden ist, zeigt Figur 4 zwei Brennflecke 8a, 8b. Hierfür wird die Laserbehandlungseinheit mit zwei Strahleinrichtungen gemäß Anspruch 13 ausgestattet.

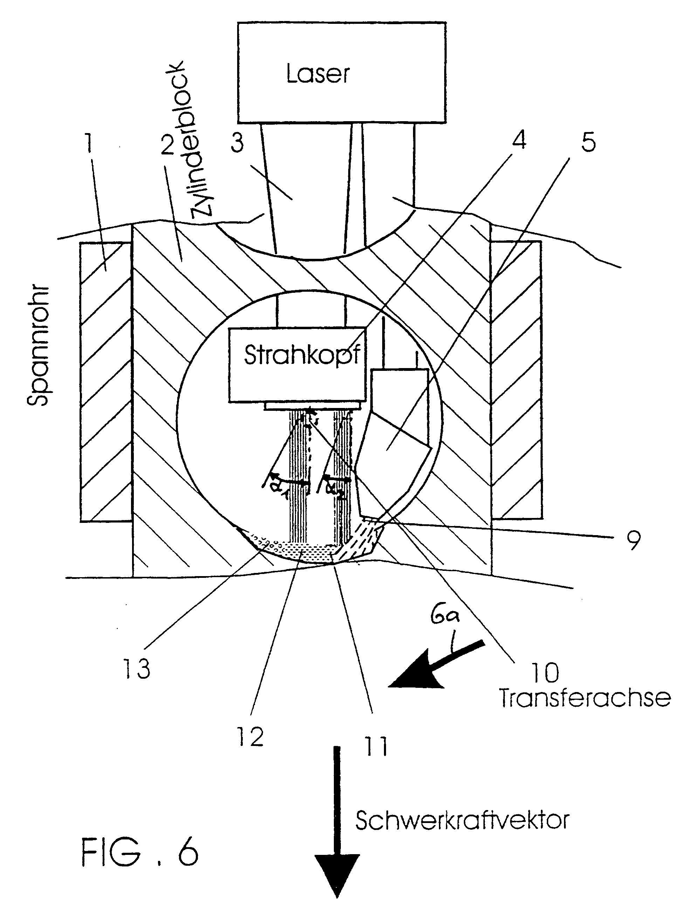

In Figur 5 ist eine Doppelspur mit zwei versetzten Brennflecken 8a, 8b und je zwei Schmelz- und Erstarrungsfronten 12, 13 dargestellt. Diese Variante erfordert eine Mehrfachpulverzuführung, wie sie im Anspruch 14 beschrieben und in Figur 6 dargestellt ist. Mit Bezugszeichen 9/11 ist die Pulverzuführung in der Vorwärmzone bezeichnet. Da man die Strahlköpfe 4.1 und 4.2 schwenken kann, sind die Schwenkwinkel mit α₁ und α₂ angegeben.

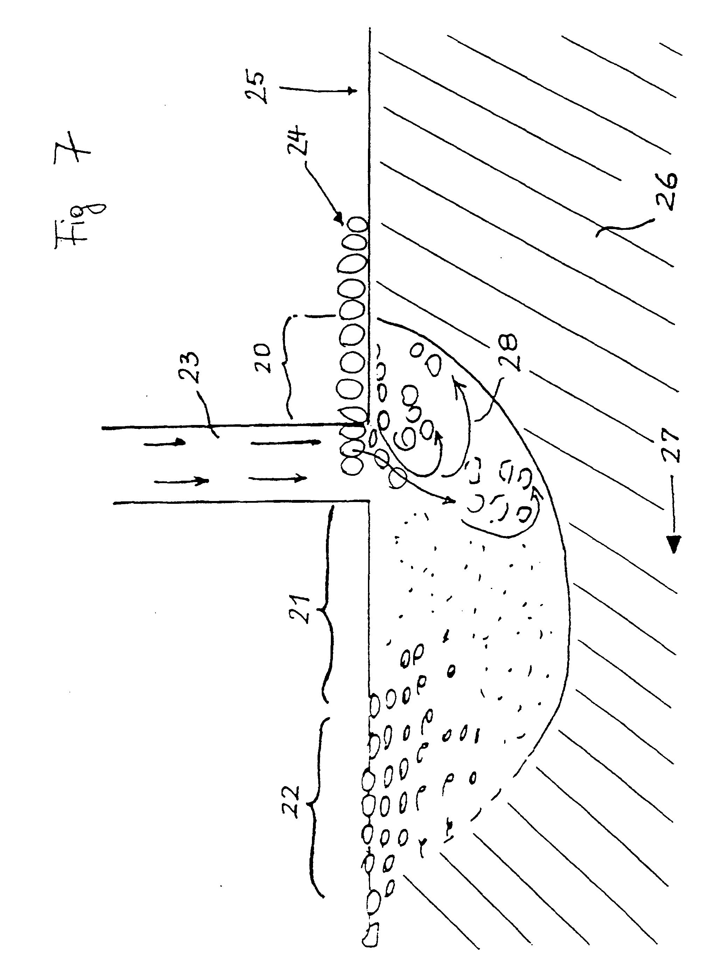

In Figur 7 ist das erfindungsgemäße Verfahren zur Herstellung eines oberflächenlegierten, zylindrischen oder teilzylindrischen Bauteiles schematisch dargestellt. Es besteht darin, daß zunächst ein Energiestrahl mit einer linienförmigen Strahlfläche (auch Linienfokus genannt) auf eine Werkstückoberfläche gerichtet wird. Dabei wird die Werkstückoberfläche aufgeschmolzen und ein Hartstoff- oder ein Legierungspulver in die aufgeschmolzene Oberfläche zugeführt.

Wie Figur 7 zeigt, bildet sich in der Auftreffzone des Energiestrahls ein lokal begrenztes Schmelzbad mit einer Erwärmungs- und Aufschmelzfront 20, einer Lösungszone bzw. Umschmelzzone 21 und eine Erstarrungsfront 22 aus.

Seitlich vom Energiestrahl 23 wird eine Pulvermenge 24 in Schwerkraftrichtung auf die Oberfläche des Bauteils 26 aufgebracht. Die Menge des Pulvers 24 wird mit der Vorschubbewegung 27 des Werkstücks oder Bauteils 26 koordiniert, wobei die Pulverstrahlbreite quer zur Bildebene von Figur 7 in etwa der Breite des Energiestrahls 23 entspricht (ebenfalls gemessen in Querrichtung zur Bildebene).

Man erkennt aus Figur 7, wie die auf der Werkstückoberfläche zugeführte Pulvermenge in der Erstarrungsfront aufgewärmt und dann spätestens im Energiestrahl 23 im Schmelzbad gelöst wird. Versuche haben ergeben, daß bei einer Wellenlänge von 780 bis 940 nm der Energiestrahl optimiert in die Metallmatrix einkoppelt, aber auch daß das Pulver optimiert und schnell aufgeheizt und im Kontakt mit der verflüssigten Matrixlegierung in der Schmelze gelöst wird.

Wie die Pfeile 28 in Figur 7 andeuten, tritt eine Konvektion in der Lösungszone auf, so daß der Homogenisierungsvorgang in der Schmelzzone beschleunigt wird. Dies wird ermöglicht durch den Energiestrahl mit einer spezifischen Leistung von mindestens 10⁴ W/cm². An Schliffbildern ist zu erkennen, daß das Hartstoff- oder Legierungspulver im Schmelzbad nur dann gleichmäßig verteilt ist, wenn der Linienfokus ausreichend lange auf die Lösungszone eingewikrt hat. Die genauen Werte lassen sich im Versuch ermitteln.

Das gleichmäßig in der Schmelze gelöste Pulvermaterial wird dann in der Erstarrungszone 22 einer gerichteten Erstarrung mit einer Abkühlungsgeschwindigkeit in der Erstarrungsfront von 200 bis 600 K/sec unterworfen, wobei die Vorschubgeschwindigkeit zwischen 500 und 10.000 mm/min beträgt. In einer Variante des erfindungsgemäßen Verfahrens wird das Pulver im Gasstrom auf die Bauteiloberfläche befördert, so daß durch die kinetische Energie bereits eine bestimmte Pulvermenge in die Aufschmelzzone eindringen kann.

Weitere Versuche haben ergeben, daß der Energiestrahl in bevorzugter Weise vor der Auftreffzone geteilt wird, wobei ein erster Teilstrahl in der Erwärmungs- und Aufschmelzzone und ein zweiter Teilstrahl hinter die Erstarrungsfront zur thermischen Gefügebehandlung gelenkt wird. Mit diesem Verfahren läßt sich die Gefügeausbildung gezielt steuern. Eine Vorrichtung zur Ausübung des Verfahrens ist in Figur 6 dargestellt.

Eine weitere Gefügesteuerung ist dadurch möglich, daß der Energiestrahl in der Erstarrungsfront mit einer spezifischen Leistung von < 1 KW/mm² auf die Werkstückoberfläche gerichtet ist. Dabei hat sich herausgestellt, daß die Einwirkungszeit des Energiestrahls im Schmelzbad zur Lösung und homogenen Verteilung der Hartstoff- oder intermetallischen Phasen zwischen 0,01 und 1 Sekunde liegt.

Die genannten Anforderungen werden durch einen Diodenlaser von ≥ 3 KW erfüllt, der eine einstellbare Linienfokus-Breite aufweist. Hiermit kann vor Beginn und am Ende des Einlegierens der Energiestrahl in der Linienfokus-Breite quer zur vorschubrichtung reduziert werden. In analoger Weise ist auch die Pulvermenge steuerbar, so daß bei einer flächigen Behandlung nur geringe Überschneidungen der zugeführten Pulvermenge bzw. der eingestrahlten Energie festgestellt wurden.

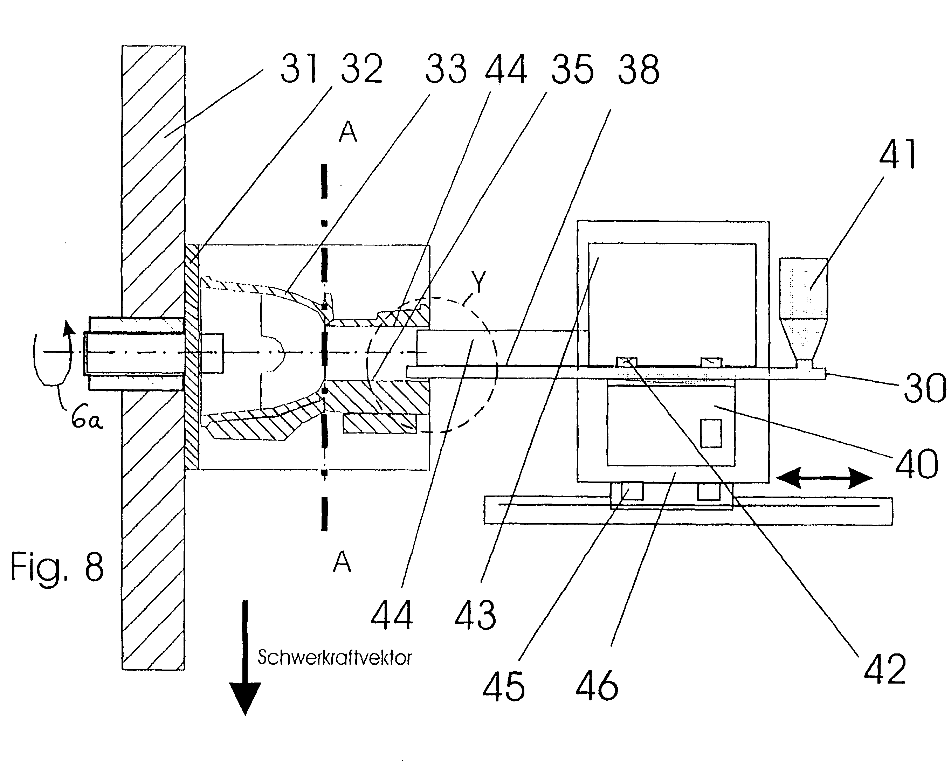

Sofern das Werkstück als Hohlzylinder ausgebildet ist, sollte es bevorzugt in Wannenlage um den Energiestrahl rotieren, so daß der Energiestrahl, der in bezug auf die Rotationsrichtung ortsfest gehalten wird, eine kontinuierliche Vorschubrichtung während der Rotation in Richtung der Rotationsachse zur Erzeugung einer flächigen Einlegierungszone vollzieht. Dies kann den nachfolgend erläuterten Figuren 8 bis 11 entnommen werden, die einen Drehtisch 31, eine Spannvorrichtung 32, einen Motorblock 33 mit einer Zylinderbohrung 34 zeigen.

Über eine Vibrationsförderrinne 30 oder Schneckenförderer 38 wird Pulvermaterial aus einem Pulverspeicher 41 in die Zylinderbohrung 34 gefördert. Die vordeponierte Pulverlage 35 weist eine Höhe HP auf, wobei die Vibrationsförderrinne 30 in einem Abstand HA oberhalb des in Wannenlage liegenden Zylinders angeordnet ist. In der Vibrationsförderrinne 30 wird die Höhe des Pulvers HF erreicht.

Die Vibrationsförderrinne 30 weist eine Vibrationsanregung 40 mit der Frequenz f auf. Ferner ist an der Vibrationsförderrinne 30 ein Koppelelement 42 für die Erzeugung der Vibrationen angebracht.

Über einen Diodenlaser 43 und eine Laseroptik 44 wird der Energiestrahl umgelenkt und fokussiert und auf die Zylinderbohrung geleitet. Vibrationsförderrinne 30 und Diodenlaser 43 sind auf einer Montageplatte 46 befestigt, die auf einem Vorschubschlitten 45 ruht. Der Vorschubschlitten 45 kann über einen Linearantrieb in die Zylinderbohrung 34 ein- und ausgefahren werden. Dies ist mit dem Doppelpfeil in Figur 8 angedeutet.

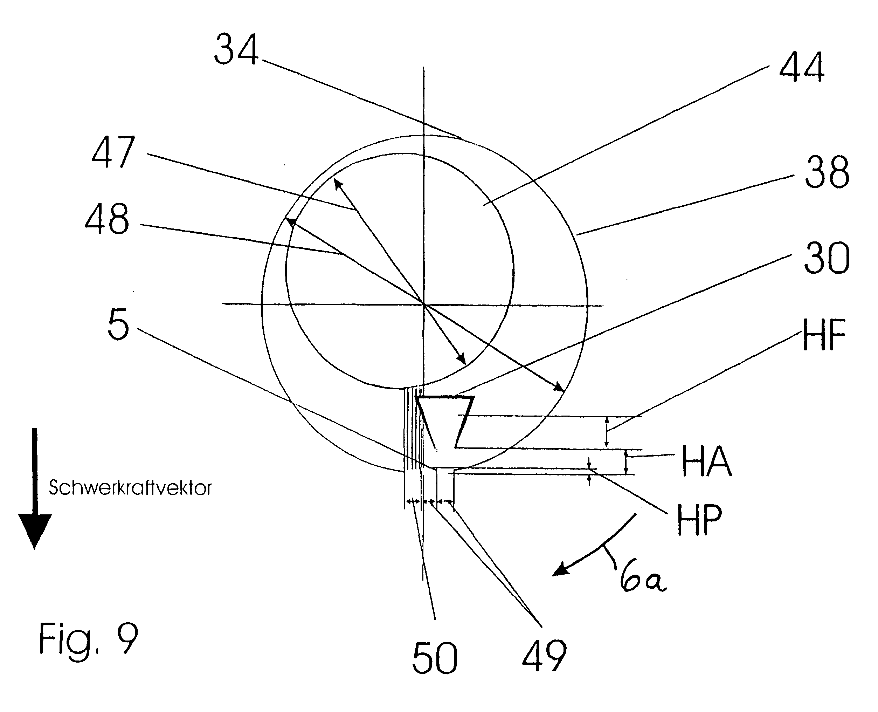

Gemäß Figur 9 ist der Durchmesser 47 der Laseroptik so bemessen, daß in der Zylinderbohrung 34 noch Platz für die Förderrinne 30 bleibt. Da der Zylinder in Wannenlage bearbeitet wird, tritt der Laserstrahl nach unten aus der Laseroptik 44 aus, wobei sich eine Spurbreite 50 des Laserstrahls auf der Zylinderwand abzeichnet. Neben der Laserspur wird das Pulver vordeponiert in einer Spurbreite 49. Mit 48 ist der Bohrungsdurchmesser des Zylinders bezeichnet.

Zur Durchführung des Verfahrens wurden Vorrichtungen entwickelt, die für großtechnische Bearbeitungen von Werkstücken und Bauteilen geeignet sind. Dazu besteht die Vorrichtung gemäß Figur 8 aus einer Spannvorrichtung 32, auf der ein Motorblock 33 über Indexbohrungen und/oder über Bearbeitungsflächen ausgerichtet und eingespannt wird. Auf die Bearbeitungsflächen werden in Zylinderachsrichtung Energiestrahleinrichtungen eingefahren und mit einem fokussierbaren Strahlkopf und einer Pulverzuführung auf die Bearbeitungsfläche gerichtet. Es hat sich als besonders günstig erwiesen, daß der Energiestrahl in das Werkstück einfahrbar ist, das auf einem Drehtisch 31 mit einer Spannvorrichtung 32 angeordnet ist, wobei der Energiestrahl als Linienfokus aus einer Diodenlaseroptik 44 senkrecht auf das in Wannenlage rotierende Werkstück, z.B. einem Motorblock 33, gerichtet ist.

Wenn mehrere Energiestrahleinheiten versetzt zueinander auf die Bearbeitungsfläche des in Wannenlage rotierenden Werkstücks gerichtet sind, sollte die Energiestrahleinheit die Bearbeitungsfläche zeilenförmig überstreichen. Dabei ergibt sich eine flächige Einlegierungszone, die je nach Begrenzungseinrichtung der Vorrichtung und/oder Drehbewegung des Bauteiles dimensioniert werden kann.

Vorteilhafterweise überstreichen die Energiestrahleinheiten mehrere Zeilen der Bearbeitungsfläche gleichzeitig. Dadurch werden die Bearbeitungszeiten verkürzt und die behandelten Oberflächen vergleichmäßigen sich.

Eine Alternative zu der in Figuren 1 bis 6 dargestellten Pulverzuführung über eine oder mehrere Düsen wird nachfolgend erläutert. Dabei handelt es sich um eine Pulverzufuhr mittels Förderschnecke oder Vibrationseinrichtung, die sich insbesondere bei hohen Temperaturen und in engen Zylinderbohrungen bewährt hat.

Die Wärmeabstrahlung bei hohen Laser leistungen ist sehr intensiv, so daß übliche Düsenmaterialien, die in die Nähe der Laserauftreffzone angeordnet sind, den hohen Temperaturen nicht standhalten oder erodieren. Darüberhinaus steht das über die Düse abgestrahlte Pulver unter hohem Druck und hat eine starke Auswirkung auf die Gasströmung innerhalb der zu bearbeitenden Zylinderbohrung. Mit der Gasströmung verändert sich das Temperaturniveau und die Dichte des Schutzgases, so daß die Effektivität des Lasers starken Schwankungen ausgesetzt ist.

Mit einer Vibrationsförderrinne 30 lassen sich diese Bedingungen wesentlich besser steuern. Das Temperaturniveau und die Schutzgasatmosphäre wird bei der Pulverzuführung über eine Förderschnecke oder Förderrinne nicht beeinträchtigt. Es können hochfeste und temperaturbeständige Materialen für die Förderrinne benutzt werden, so daß auch eine langfristige Temperatureinwirkung keinerlei Ermüdungserscheinungen oder Erosionseffekte auslöst.

Die Bearbeitung der Zylinderbohrung 34 in Wannenlage ist mit einer Zuführung des Pulvers über eine Schwingrinne besonders effektiv, wenn dies mit einer gemäß Anspruch 1 b) vordeponierten Pulverlage HP erfolgt.

Selbstverständlich lassen sich auch andere Fördereinrichtungen wie z.B. Förderschnecken, Förderbänder oder dergleichen verwenden.

Diese haben gegenüber der Pulverförderung in einer Düse den Vorteil, daß eine Spur mit der Breite der Laserfokusbreite und eine Höhe bzw. Schichtdicke zwischen 0,3 - 3 mm genau einstellbar ist.

Um die Dosierung des Pulvers genau steuern zu können, werden vorteilhafter Weise mechanische Abstreifer oder Bürsten im Bereich der Auftragszone angeordnet. Damit läßt sich die Materialmenge in der Breite und Höhe beliebig steuern. Vorzugsweise ist die Schichtdicke des aufgeschütteten Pulvers im Bereich von 0,3 bis 3 mm zu halten, wobei für eine hohe Schichtdicke eine höhere Energiedichte des Lasers benötigt wird.

Ein wesentlicher Faktor für die Einkopplung der Laserenergie in das Pulvermaterial ist das Kornspektrum und die Kristallform des verwendeten Pulvers.

Zur Durchführung im großtechnischen Maßstab wurde ein Diodenlaser 43 mit einer Laseroptik 44 entwickelt, die bezogen auf die Drehrichtung des Bauteils ortsfest innerhalb der drehbaren, mit einer Antriebseinheit verbundenen Spannvorrichtung 32 angeordnet sind. Der Diodenlaser mit Optik wird mittels eines Vorschubschlittens 45 zusammen mit der Pulverzuführungseinrichtung, die seitlich neben dem Energiestrahl angeordnet ist, in die Zylinderbohrung 34 gefahren. Es ist auch möglich, das Pulver auf die dem Strahl zugewandten Oberflächen zu deponieren. Dies erfolgt gemäß Figur 8 durch eine Förderrinne 30, mit der das Pulver in Schwerkraftrichtung lose aufgerieselt wird. Es entsteht eine vordeponierte Pulverlage 35, wobei die Austrittshöhe HA der Förderrinne in Figur 9 angegeben ist.

Für die Herstellung von wendelförmigen oder anderen geometrischen Führungen des Linienfokusses sollte die Antriebseinheit für den Drehtisch 31 eine variable Drehzahl ermöglichen. Dabei kann der Vorschubschlitten 45 des Diodenlasers 43 und der Pulverzuführung in Rotationsachsrichtung mit der Drehgeschwindigkeit des Motorblocks 33 kombiniert werden.

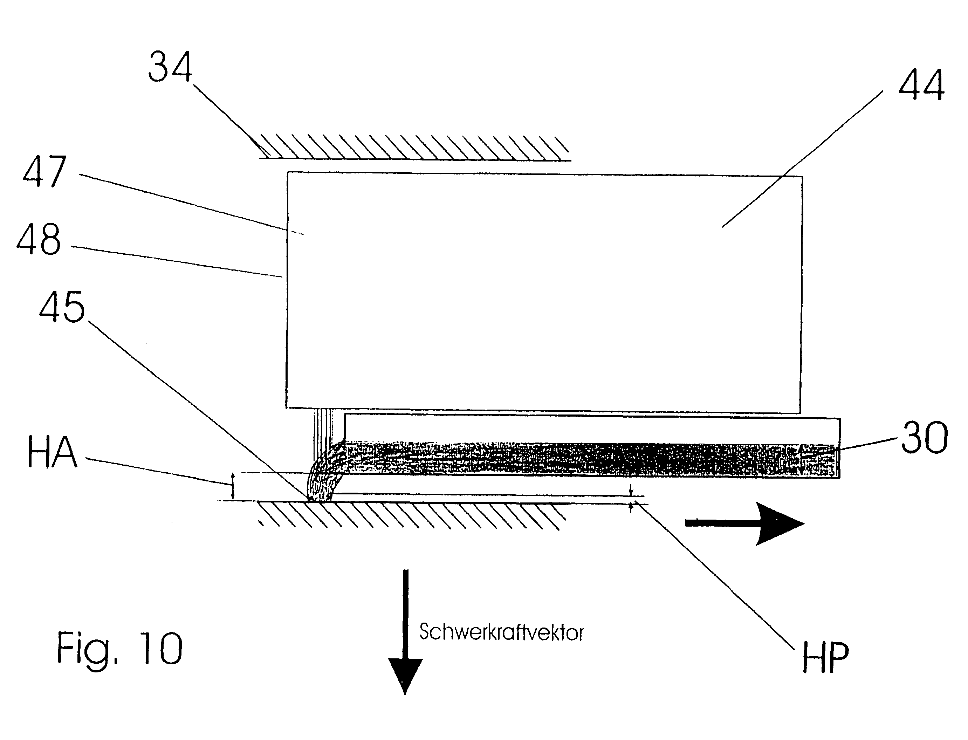

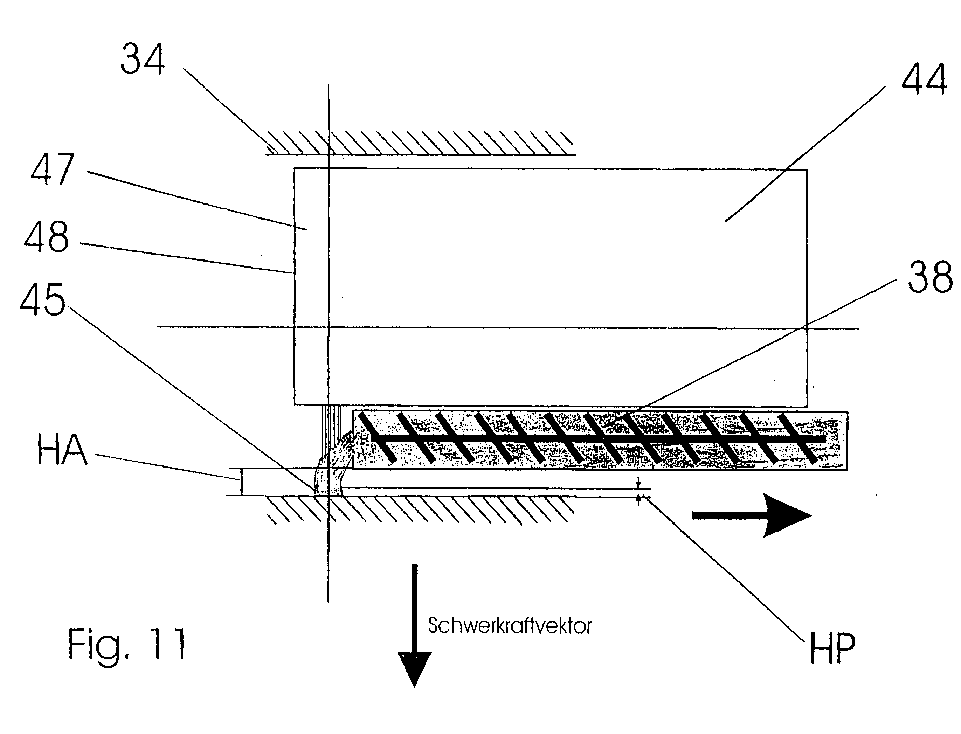

In den Figuren 10 und 11 bewirkt die Vibrationsförderrinne 30 bzw. Schneckenförderer 38 eine Pulverhöhe HP, wobei der Abstand zur Fördereinrichtung mit HA bezeichnet ist. Die Zylinderbohrung 34 nimmt die Laseroptik 44 mit Bohrungsdurchmesser 48 auf und beide werden auf einem Vorschubschlitten 45 in Pfeilrichtung bewegt.

Mit dem beschriebenen Verfahren sind oberflächenlegierte, zylindrische oder teilzylindrische besonders Hohlzylinder-Bauteile herstellbar. Sie bestehen aus einer Aluminiummatrixgußlegierung und einer bis an die Bauteiloberfläche reichenden Ausscheidungszone aus einer Aluminium-Basislegierung mit ausgeschiedenen Hartphasen. Zwischen Matrix und Ausscheidungszone liegt eine durch primäre Hartphasen übersättigte, eutektische Zone (Übersättigungszone) vor, wobei der Härteanstieg von der Matrix bis zur Bauteiloberfläche stufenweise erfolgt. Besonders günstige Verhältnisse lassen sich erreichen, wenn die Matrixlegierung vom Typ AlSiCu oder AlSiMg untereutektisch ist und in der übersättigten, eutektischen Übergangszone eine Legierung vom Typ AlSi mit fein ausgeschiedenen Primärsiliziumphasen kleiner 1 µm vorliegt, während in der Ausscheidungszone Primärsiliziumphasen von 2 bis 20 µm vorliegen. Dann lassen sich Härteanstiege bis zur Bauteiloberfläche von über 200 % erreichen.

## Patentansprüche

1. Verfahren zur Herstellung eines oberflächenlegierten zylindrischen, teilzylindrischen oder hohlzylindrischen Bauteiles, wobei ein Energiestrahl mit einer linienförmigen Strahlfläche, im folgenden Linienfokus genannt, auf eine Werkstückoberfläche gerichtet, **dadurch** die Werkstückoberfläche aufgeschmolzen und ein Hartstoffpulver in die aufgeschmolzene Oberfläche zugeführt wird, wobei in der Auftreffzone des Energiestrahls ein lokal begrenztes Schmelzbad mit einer Erwärmungs- und Aufschmelzfront, einer Lösungszone und einer Erstarrungsfront erzeugt wird,
**dadurch gekennzeichnet, daß**
a) seitlich vor dem Energiestrahl das Hartstoffpulver über eine Fördereinrichtung in Schwerkraftrichtung aufgebracht und mit der Vorschubbewegung des Werkstücks koordiniert in einer Breite zugeführt wird, die der Breite des Linienfokus entspricht und dabei eine Schichthöhe von 0,3 - 3 mm erzeugt wird,
b) die auf der Werkstückoberfläche zugeführte Hartstoffpulvermenge in der Erwärmungsfront des Schmelzbades mit einem Energiestrahl mit einer Wellenlänge von 780 - 940 nm aufgeheizt und im Kontakt mit der verflüssigten Matrixlegierung die Pulvermenge sofort in das Schmelzbad eingelöst wird,
c) durch den Energiestrahl mit einer spezifischen Leistung von mindestens 10⁴ W/cm² eine Konvektion in der Lösungszone erzeugt wird, so daß der Homogenisierungsvorgang in der Schmelzzone beschleunigt wird,
d) wobei der Linienfokus solange auf die Lösungszone einwirkt, bis das Hartstoffpulver im Schmelzbad gleichmäßig verteilt ist,
e) das vor dem Energiestrahl gleichmäßig verteilte Pulvermaterial, welches in der Lösungszone metallurgisch in Lösung gegangen ist, einer gerichteten Erstarrung in der Erstarrungsfront mit hoher Abkühlgeschwindigkeit von 200 - 600 K/sec unterworfen wird bei einer Vorschubgeschwindigkeit von 500 - 10.000 mm/min.

2. Verfahren nach Anspruch 1, **dadurch gekennzeichnet, daß** das Hartstoffpulver in den Verfahrensschritten c) - e) ein Siliziumpulver mit einem Korndurchmesser von 40 - 90 µm ist.

3. Verfahren nach einem der vorhergehenden Ansprüche, **dadurch gekennzeichnet, daß** der Energiestrahl vor der Auftreffzone geteilt wird, wobei ein erster Teilstrahl in die Erwärmungszone und Aufschmelzone und ein zweiter Teilstrahl hinter die Erstarrungsfront zur thermischen Gefügebehandlung gelenkt wird.

4. Verfahren nach Anspruch 3, **dadurch gekennzeichnet, daß** der zweite Teilstrahl hinter der Erstarrungsfront zur Steuerung des Ausscheidungsgefüges mit einer spezifischen Leistung von < 1 KW/mm² auf die Werkstückoberfläche gerichtet ist.

5. Verfahren nach Anspruch 2, **dadurch gekennzeichnet, daß** die Einwirkungszeit des Energiestrahls im Schmelzbad zur Lösung und homogenen Verteilung von primär ausgeschiedenen Si-Phasen zwischen 0,01 und 1 Sekunde beträgt.

6. Verfahren nach einem der vorhergehenden Ansprüche, **dadurch gekennzeichnet, daß** zur Formung des Energiestrahls ein Diodenlaser von ≥ 3 KW mit veränderbarer Optik zur Einstellung der Linienfokus-Breite von 4 - 15 mm verwendet wird.

7. Verfahren nach einem der vorhergehenden Ansprüche, **dadurch gekennzeichnet, daß** vor Beginn und am Ende einer Einlegierung der Energiestrahl und die Pulvermenge in der Linienfokus-Breite quer zur Vorschubrichtung reduziert wird.

8. Verfahren nach einem der vorhergehenden Ansprüche, **dadurch gekennzeichnet, daß** das Werkstück als Hohlzylinder ausgebildet ist und während des Einlegierens in Wannenlage um den Energiestrahl rotiert, wobei der Energiestrahl, der in bezug auf die Rotationsrichtung ortsfest gehalten wird, eine kontinuierliche Vorschubbewegung während der Rotation in Richtung der Rotationsachse zur Erzeugung einer flächigen Einlegierungszone vollzieht.

9. Verfahren nach einem der vorhergehenden Ansprüche, **dadurch gekennzeichnet, daß** am Beginn des Einlegierens der Energiestrahl punktförmig ausgebildet ist und sich zusammen mit der Pulvermenge kontinuierlich vergrößert, bis er nach einer Umdrehung des Werkstücks die volle Linienfokus-Breite erreicht hat.

10. Verfahren nach einem der vorhergehenden Ansprüche, **dadurch gekennzeichnet, daß** bei Beendigung der Einlegierung während des letzten Umlaufs des Werkstücks die Linienfokus-Breite und die Pulvermenge kontinuierlich auf Null reduziert werden.

11. Verfahren nach einem der vorhergehenden Ansprüche, **dadurch gekennzeichnet, daß** ein Hohlzylinder aus Al- oder Mg-Legierungen mit einem Bohrungsdurchmesser von 60 - 120 mm in einer Tiefe bis zu 200 mm behandelt wird.

## Claims

1. A method for manufacturing a surface-alloyed cylindrical, partly cylindrical or hollow cylindrical component where an energy beam having a linear radiation area, hereinafter called a linear focus, is directed onto a workpiece surface as a result of which the workpiece surface is melted and a hard-material powder is fed into the molten surface, whereby in the zone of incidence of the energy beam there is formed a locally bounded melting bath with a heating and melting front, a solution zone and a solidification front
**characterised in**
**that**
a) at the side of the energy beam the hard material powder is deposited via a conveyor device in the direction of gravity and is supplied co-ordinated with the feed movement of the workpiece in a width which corresponds to the width of the linear focus and a layer height of 0.3 - 3 mm is thereby produced,
b) the hard-material powder quantity supplied to the workpiece surface in the heating front of the melting bath is heated by an energy beam at a wavelength of 780 - 940 nm and in contact with the liquefied matrix alloy the powder quantity is immediately dissolved in the melting bath,
c) convection is produced in the solution zone by the energy beam having a specific power of at least 10⁴ W/cm², so that the homogenisation process in the melting zone is accelerated,
d) where the linear focus acts on the solution zone until the hard material powder is uniformly distributed in the melting bath,
e) the uniformly distributed powder material in front of the energy beam, which has gone into solution metallurgically in the solution zone, is subjected to directional solidification in the solidification front at a high cooling rate of 200 - 600 K/sec at a feed rate of 500 - 10,000 mm/min.

2. The method according to Claim 1,
**characterised in**
**that** the hard material powder in process steps c) - e) is silicon powder with a grain diameter of 40 - 90 µm.

3. The method according to one of the preceding claims,
**characterised in**
**that** the energy beam is split before the zone of incidence where a first part beam is deflected into the heating zone and melting zone and a second part beam is deflected behind the solidification front for thermal structural treatment.

4. The method according to Claim 3,
**characterised in**
**that** the second part beam is directed behind the solidification front onto the workpiece surface at a specific power of < 1 kW/mm² to control the precipitation structure.

5. The method according to Claim 2,
**characterised in**
**that** the time of action of the energy beam in the melting bath for dissolving and homogeneously distributing primary precipitated Si phases is between 0.01 and 1 second.

6. The method according to one of the preceding claims,
**characterised in**
**that** a ≥3 kW diode laser with a variable optical system to adjust the linear focal width of 4 - 15 mm is used to form the energy beam.

7. The method according to one of the preceding claims,
**characterised in**
**that** before the beginning and at the end of an alloying the linear focal width of the energy beam and the quantity of powder is reduced transverse to the feed direction.

8. The method according to one of the preceding claims,
**characterised in**
**that** the workpiece is constructed as a hollow cylinder and rotates about the energy beam in the down-hand position during alloying whereby the energy beam which is held in a fixed position relative to the direction of rotation, achieves a continuous feed movement during the rotation in the direction of the axis of rotation to produce a flat alloying zone.

9. The method according to one of the preceding claims,
**characterised in**
**that** at the beginning of alloying the energy beam has a point structure and continually increases in size together with the quantity of powder until it has reached the complete linear focal width after a rotation of the workpiece.

10. The method according to one of the preceding claims,
**characterised in**
**that** at the end of the alloying during the last rotation of the workpiece the linear focal width and the quantity of powder are continuously reduced to zero.

11. The method according to one of the preceding claims,
**characterised in**
**that** a hollow cylinder made of Al or Mg alloys having a bore diameter of 60 - 120 mm is treated at a depth of up to 200 mm.

## Revendications

1. Procédé de fabrication d'un composant cylindrique, partiellement cylindrique ou cylindrique creux allié en surface, dans lequel un faisceau énergétique qui présente une surface d'irradiation linéaire ci-dessous appelée foyer linéaire est orienté à la surface d'une pièce, la surface de la pièce étant ainsi fondue, et dans lequel une poudre de matière dure est apportée dans la surface fondue, un bain de fusion localement limité étant créé dans la zone d'incidence du faisceau énergétique et présentant un front d'échauffement et un front de fusion, une zone de dissolution et un front de solidification,
**caractérisé en ce que** :
a) sur le côté avant du faisceau énergétique, la poudre de matière dure est appliquée dans la direction de la gravité par un dispositif de transport et est apportée d'une manière coordonnée avec le déplacement d'avancement de la pièce et sur une largeur qui correspond à la largeur du faisceau linéaire, pour ainsi créer une couche d'une hauteur de 0,3 à 3 mm,
b) la quantité de poudre de matière dure apportée à la surface de la pièce dans le front d'échauffement du bain de fusion est chauffée par un faisceau énergétique d'une longueur d'onde de 780 à 940 nm, la poudre étant immédiatement dissoute dans le bain de fusion au contact avec l'alliage de la matrice liquéfiée,
c) par le faisceau énergétique d'une puissance spécifique d'au moins 10⁴ W/cm², on crée dans la zone de dissolution une convection qui accélère l'opération d'homogénéisation dans la zone de fusion,
d) le foyer linéaire agit sur la zone de dissolution jusqu'à ce que la poudre de matière dure ait été répartie régulièrement dans le bain de fusion,
e) le matériau en poudre réparti régulièrement en amont du faisceau énergétique et qui est entré en solution métallurgique dans la zone de dissolution subit une solidification orientée dans le front de solidification à une haute vitesse de refroidissement, de 200 à 600 K/s et à une vitesse d'avancement de 500 à 10 000 mn/min.

2. Procédé selon la revendication 1, **caractérisé en ce que** la poudre de matière dure des étapes de traitement c) à e) est une poudre de silicium en grains d'un diamètre de 40 à 90 µm.

3. Procédé selon l'une des revendications précédentes, **caractérisé en ce que** le faisceau énergétique est divisé en amont de la zone d'incidence, un premier faisceau partiel étant dévié dans la zone d'échauffement et la zone de fusion et un deuxième faisceau partiel étant dévié en aval du front de solidification en vue d'un traitement thermique du réseau.

4. Procédé selon la revendication 3, **caractérisé en ce qu'**en arrière du front de solidification, le deuxième faisceau partiel est orienté sur la surface de la pièce à une puissance spécifique < 1 kW/mm² pour contrôler le réseau de précipitation.

5. Procédé selon la revendication 2, **caractérisé en ce que** la durée d'action du faisceau énergétique dans le bain de fusion en vue de la dissolution des phases de précipitation primaire de Si réparties de manière homogène est comprise entre 0,01 et 1 seconde.

6. Procédé selon l'une des revendications précédentes, **caractérisé en ce que** pour façonner le faisceau énergétique, on utilise un laser à diode de ≥ 3 kW dont l'optique peut être modifiée pour régler la largeur du foyer linéaire entre 4 et 15 mm.

7. Procédé selon l'une des revendications précédentes, **caractérisé en ce qu'**avant le début et à la fin de l'incorporation d'un élément d'alliage, le faisceau énergétique et la quantité de poudre sur la largeur du foyer linéaire sont réduits dans la direction transversale à la direction d'avancement.

8. Procédé selon l'une des revendications précédentes, **caractérisé en ce que** la pièce est configurée comme cylindre creux et **en ce que** pendant l'addition d'éléments d'alliage, elle est tournée dans la cuve autour du faisceau énergétique, le faisceau énergétique maintenu fixe par rapport au sens de rotation exécute pendant la rotation un déplacement d'avancement continu dans la direction de l'axe de rotation pour créer une zone d'incorporation des éléments d'alliage dans la surface.

9. Procédé selon l'une des revendications précédentes, **caractérisé en ce qu'**au début de l'incorporation des éléments d'alliage, le faisceau énergétique est configuré en point et s'agrandit en continu en même temps que la quantité de poudre jusqu'à avoir atteint la totalité de la largeur du foyer linéaire après un tour de la pièce.

10. Procédé selon l'une des revendications précédentes, **caractérisé en ce qu'**à la fin de l'incorporation des éléments d'alliage, pendant le dernier tour de la pièce, la largeur du foyer linéaire et la quantité de poudre sont réduites à zéro de manière continue.

11. Procédé selon l'une des revendications précédentes, **caractérisé en ce qu'**on y traite un cylindre creux d'alliages d'Al ou de Mg dont l'alésage a un diamètre de 60 à 120 mm à une profondeur qui peut atteindre 200 mm.
